(19) Europäisches Patentamt
European Patent Office
Office européen des brevets

(11) Publication number: **0 385 941 A2**

(12) **EUROPEAN PATENT APPLICATION**

(21) Application number: **90810126.4**

(22) Date of filing: **21.02.90**

(51) Int. Cl.5: **C09D 5/08, C10M 133/44, C10M 135/36, C23F 11/14, C23F 11/16, //C10N30/12**

(30) Priority: **02.03.89 GB 8904761**

(43) Date of publication of application: **05.09.90 Bulletin 90/36**

(84) Designated Contracting States: **BE DE FR GB IT**

(71) Applicant: **CIBA-GEIGY AG**
**Klybeckstrasse 141**
**CH-4002 Basel(CH)**

(72) Inventor: **Phillips, Emyr, Dr.**
**1 Hill Top View, Tingley**
**Wakefield, West Yorkshire(GB)**
Inventor: **Wasson, Robert Craig, Dr.**
**27 Phythian Crescent, Penketh**
**Warrington, Cheshire WA5 2BT(GB)**

(54) **Corrosion-resistant compositions.**

(57) The present invention provides a composition comprising a coating material or a lubricant and, as corrosion inhibitor and/or antioxidant, at least one compound having the formula I

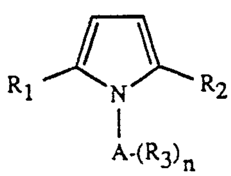

I

wherein

A is a phenyl or naphthyl residue or a residue of a heterocyclic ring having 5-7 ring members and containing 1 to 4 nitrogen atoms and 0 to 2 sulphur or oxygen atoms and which is substituted by n groups $R_3$;

$R_1$ and $R_2$ are the same or different and each is hydrogen, $C_1$-$C_4$ alkyl or $C_6$-$C_{10}$ aryl;

$R_3$ is $C_1$-$C_{15}$ alkyl, $C_1$-$C_4$ halogenoalkyl, $C_1$-$C_{12}$ alkoxy, thio, $C_1$-$C_{12}$ alkylthio, phenylthio, benzylthio, phenyl, $C_7$-$C_{15}$ alkylphenyl, $C_7$-$C_{10}$ phenylalkyl, halogen, nitro, cyano, carboxy-($C_1$-$C_{12}$ alkyl), hydroxy, amino, $CONH_2$, $CONH(R_4)$, $CON(R_4)_2$, $NHR_4$ or $N(R_4)_2$ in which $R_4$ is $C_1$-$C_{15}$ alkyl, $C_3$-$C_{15}$ alkyl interrupted by one or more oxygen atoms, or is $C_5$-$C_{12}$ cycloalkyl, benzyl or phenyl which is optionally substituted by halogen, $C_1$-$C_4$ alkyl, $C_1$-$C_4$ alkoxy or nitro, or the group $N(R_4)_2$ is a pyrrole, piperidine or morpholine group; and n is 0, 1, 2 or 3.

EP 0 385 941 A2

# Corrosion-resistant compositions

The present invention relates to corrosion resistant compositions, in particular to compositions comprising coating and lubricating material containing, as corrosion inhibitors, pyrrole derivatives.

Pyrrole and certain of its derivatives are known to be useful as stabilisers both for organic materials such as trichloroethylene (Belgian Patent 625490) and especially, for the protection of metal surfaces against corrosion in acid pickling baths (e.g. U.S. Patent Specification No. 3329619).

This known corrosion protection of metals does not apply to all pyrrole derivatives, nor to all substrates. For example, in the article in "Peintures, Pigments, et Vernis", 39(1963), 295-303, Chem. Abs. 59: 8974e, N-heterocycles such as pyrroles are said to cause yellowing of the coating when formed in linseed-based paint substrates.

We have now found that certain specific pyrrole derivatives provide excellent corrosion inhibition for metals when incorporated into surface coating compositions or lubricants.

Accordingly, the present invention provides a composition comprising a coating material or a lubricant and, as corrosion inhibitor and/or antioxidant, at least one compound having the formula I

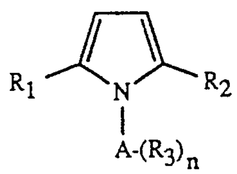

I

wherein

A is a phenyl or naphthyl residue or a residue of a heterocyclic ring having 5-7 ring members and containing 1 to 4 nitrogen atoms and 0 to 2 sulphur or oxygen atoms and which is substituted by n groups $R_3$; $R_1$ and $R_2$ are the same or different and each is hydrogen, $C_1$-$C_4$ alkyl or $C_6$-$C_{10}$ aryl;

R3 is $C_1$-$C_{15}$ alkyl, $C_1$-$C_4$ halogenoalkyl, $C_1$-$C_{12}$ alkoxy, thio, $C_1$-$C_{12}$ alkylthio, phenylthio, benzylthio, phenyl, $C_7$-$C_{15}$ alkylphenyl, $C_7$-$C_{10}$ phenylalkyl, halogen, nitro, cyano, carboxy-($C_1$-$C_{12}$ alkyl), hydroxy, amino, $CONH_2$, $CONH(R_4)$, $CON(R_4)_2$, $NHR_4$ or $N(R_4)_2$ in which $R_4$ is $C_1$-$C_{15}$ alkyl, $C_3$-$C_{15}$ alkyl interrupted by one or more oxygen atoms, or is $C_5$-$C_{12}$ cycloalkyl, benzyl or phenyl which is optionally substituted by halogen, $C_1$-$C_4$ alkyl, $C_1$-$C_4$ alkoxy or nitro, or the group $N(R_4)_2$ is a pyrrole, piperidine or morpholine group; and n is 0, 1, 2 or 3.

When A is the residue of an N-containing 5-7 membered heterocycle containing 1 to 4 nitrogen atoms it may be fused to a further heterocyclic ring or to a 6-membered carbocyclic ring. It may contain one or two further heteroatoms which are oxygen or sulphur atoms and may contain a group $-\underset{|}{C}=X$ in which X is oxygen or sulphur, preferably sulphur.

$C_1$-$C_4$ Alkyl groups $R_1$ and $R_2$ are methyl, ethyl, n-propyl, isopropyl, n-, sec-, iso- or tert.butyl groups. When $R_3$ or $R_2$ are $C_1$-$C_{15}$ alkyl such alkyl groups may be branched or unbranched. Specific examples of such alkyl groups include methyl, ethyl, n-propyl, isopropyl, n-butyl, sec-butyl, isobutyl, tert.butyl, pentyl, hexyl, n-octyl, 2-ethylhexyl, 1,1,3,3-tetramethylbutyl, 1,1,3,3,5,5-hexamethylhexyl, n-decyl, isodecyl, n-dodecyl and pentadecyl groups.

$C_6$-$C_{10}$ Aryl groups $R_1$ or $R_2$ are preferably phenyl or naphthyl groups.

$C_1$-$C_4$ Halogenoalkyl groups $R_3$ may be e.g. chloromethyl, trichloromethyl, bromomethyl, 2-chloroethyl, 2,2,2-trichloromethyl, trifluoromethyl or 2,3-dichloropropyl.

As $C_1$-$C_{12}$ alkoxy or $C_1$-$C_{12}$ alkylthio, $R_3$ may be methoxy, ethoxy, isopropoxy, butoxy, hexyloxy, octyloxy, dodecyloxy, methylthio, ethylthio, or nonylthio.

$C_7$-$C_{15}$ Alkylphenyl groups $R_3$ include tolyl, xylyl, 4-ethylphenyl, 4-tert.butylphenyl, 4-octylphenyl or 4-nonylphenyl.

$C_7$-$C_{10}$ phenylalkyl groups $R_3$ may be benzyl, 1-phenylethyl, 2-phenylethyl, α,α-dimethylbenzyl or 2-phenylpropyl groups.

$C_5$-$C_{12}$ Cycloalkyl groups are e.g. cyclopentyl, cyclohexyl, cyclooctyl, cyclodecyl or cyclododecyl.

When $R_4$ is phenyl which is substituted by halogen, $C_1$-$C_4$ alkyl, $C_1$-$C_4$ alkoxy or $NO_2$, $R_4$ may be 4-chlorophenyl, 3-bromophenyl, 2-fluorophenyl, p-tolyl, 3,5-dimethylphenyl, 4-isopropylphenyl, 4-methoxyphenyl, 3-ethoxyphenyl, 4-nitrophenyl or 4-nitro-2-methylphenyl.

When $R_4$ is $C_3$-$C_{15}$ alkyl interrupted by one or more oxygen atoms, it may be 2-methoxyethyl, 2-butoxyethyl, 3,6-dioxaheptyl or 3,6-dioxadecyl.

Halogen substiuents $R_3$ or halogen moieties in substituents $R_3$ or $R_4$ are preferably bromine or chlorine, especially chlorine.

Heterocyclic residues A may be mono- or bi-cyclic; when A is a bicyclic residue it may consist of a heterocyclic ring fused to a further heterocyclic ring or to a carbocyclic ring. Examples of optionally substituted monocyclic heterocyclic residues A include pyrrole, 1,2,4-triazole, imidazole, thiazole, thiadiazole, 5-mercapto-1,2,4-thiadiazole, pyridine 2-mercaptopyridine, 4-mercaptopyridine, 3-mercaptopyridazine, 2-mercaptopyrimidine, 2-mercaptothiazole, 2-mercaptothiazoline.

Examples of bicyclic, all-heterocyclic residues A are naphthyridine, purine and pteridine residues while bicyclic-heterocyclic-aromatic residues A include, benzothiazole and benzimidazole.

Preferred compositions according to the present invention include those containing a compound of formula I wherein A is a phenyl residue or a rresidue of a heterocyclic ring having 5-6 ring members and containing 1-3 nitrogen and 0 or 1 sulphur atom and which is substituted by n groups $R_3$, $R_1$ and $R_2$ are the same or different and each is hydrogen, $C_1$-$C_4$ alkyl or phenyl, $R_3$ is hydroxy, mercapto, $C_1$-$C_4$ alkyl, $C_1$-$C_4$ alkoxy, phenyl, halogen, nitro or cyano and n is 0, 1 or2.

Especially preferred are compositions containing a compound of formula I wherein A is a phenyl residue or a pyridyl, thiazolyl, benzthiazolyl, triazolyl or thiadiazolyl residue which is substituted by n groups $R_3$, $R_1$ and $R_2$ each are methyl, $R_3$ is hydroxy, mercapto, $C_2$-$C_4$ alkyl, $C_1$-$C_4$ alkoxy, halogen or nitro and n is 0, 1 or 2.

A is especially a phenyl residue substituted by n groups $R_3$.

The compounds of formula I are known compounds and can be prepared by known methods.

Thus, for example, compounds of formula I may be prepared by condensing an amine of formula II

$(R_3)_n$-A-$NH_2$ II

with a suitable dione of formula III

$R_1$-C(=O)-$(CH_2)_2$-C(=O)-$R_2$ III

The compounds of the formula I are effective as corrosion inhibitors and an antioxidants for coating materials or lubricants.

Examples of coating materials are lacquers, paints or varnishes. They always contain a film-forming binder as well as other optional components.

Examples of coating materials are materials based on an epoxide, polyurethane, aminoplast, acrylic, alkyd or polyester resin and on mixtures of such resins. Further examples of suitable binders are vinyl resins, such as polyvinyl acetate, polyvinylbutyral, polyvinyl chloride and copolymers thereof, cellulose esters, chlorinated rubbers, phenolic resins, styrene/butadiene copolymers and drying oils.

The coating materials can contain solvents or can be free from solvents or they can be aqueous systems (dispersions, emulsions or solutions). They can be pigmented or non-pigmented and they can also be metallized. In addition to the corrosion inhibitors according to the invention, they can contain other additives customary in the technology of coating materials, for example fillers, flow control auxiliaries, dispersing auxiliaries, thixotropic agents, adhesion promoters, anti-oxidants, light stabilizers or curing catalysts. They can also contain other known anti-corrosion agents, for example anti-corrosion pigments, such as pigments containing phosphates or borates, or metal oxide pigments, or other organic or inorganic corrosion inhibitors, for example salts of nitroisophthalic acid, phosphorus esters, technical amines or substituted benzotriazoles. It is also advantageous to add basic fillers or pigments which, in certain binder systems, produce a synergistic effect on the inhibition of corrosion. Examples of such basic fillers and pigments are calcium carbonate, magnesium carbonate, zinc oxide, zinc carbonate, zinc phosphate, magnesium oxide, aluminium oxide, aluminium phosphate or mixtures thereof. Examples of basic organic pigments are pigments based on aminoanthraquinone.

The corrosion inhibitor can also be applied to a carrier. Pulverulent fillers or pigments are particularly suitable for this purpose. This technique is described in greater detail in German Patent A 3,122,907.

The corrosion inhibitors can be added to the coating material during its preparation, for example during the dispersion of pigments by grinding, or the inhibitor is dissolved in a solvent beforehand and the solution is stirred into the coating composition. The inhibitor is used in an amount of 0.1 to 20 % by weight, preferably 0.5 to 5 % by weight, based on the solids content of the coating material.

The coating materials can be applied to the substrate by the customary process, for example by spraying, dipping, brushing or by electrodeposition, in particular cathodic dip-coating. Several layers are often applied. The corrosion inhibitors are added primarily to the base layer, since they act particularly on the metal/coating interface. It is also possible, however, additionally to add the inhibitors to the top layer or intermediate layer, where they are available as a depot. Depending on whether the binder is a physically drying resin or a heat-curable or radiation-curable resin, the coating is cured at room temperature or by heating (stoving) or by irradiation.

The coating material is preferably a primer for metallic substrates e.g. iron, steel, copper, zinc or aluminium. The coating material can be an aqueous system especially a cathodically-depositable paint (cataphoresis lacquer).

It is a particular advantage of the compounds of the formula I that they do not tend to become chalky. It is a further advantage that they have a favourable effect on the adhesion of coating to metal and, finally, that they exert an antioxidative action on the coating and thus reduce the chalking of pigments and fillers. All these properties contribute towards prolonging the useful life of the coating.

Examples of lubricants to which the corrosion inhibitors according to the invention can be added are lubricating oils and lubricating greases. The lubricating oils can be mineral oils of synthetic oils or mixtures of both. Examples of synthetic oils are those based on phosphoric acid esters, polyalkylene oxides, α-olefin polymers, triesters of trimethylolpropane or tetraesters of pentaerythritol or aliphatic polyesters.

The lubricants can contain further additives, for example antioxidants, pour-point depressants, viscosity index improvers, metal deactivators, dispersing agents, high-pressure additives or anti-wear additives. They can also contain other corrosion inhibitors, for example organic acids and esters, metal salts, amine salts or anhydrides thereof, heterocyclic compounds, phosphoric acid part esters and amine salts thereof or metal salts of sulfonic acids.

It is of considerable importance for the use of the compounds of the formula I in lubricants that these compounds also act as antioxidants, since multi-purpose additives are particularly valuable in this field.

The compounds of the formula 1 are used in lubricants in an amount of 0.01 to 5 % by weight, in particular 0.2 to 2 % by weight.

Both for coating materials and for lubricants it can be important to add a mixture of several compounds of the formula I. For example, in order to lower the melting point it can be advantageous to mix two or more of such compounds.

Relative to known corrosion inhibitors, the compounds of formula I exhibit lower water absorption, chemical inertness and higher stability to heat.

The preparation and use of compounds of the formula I are described in greater detail in the following Examples. In these parts and percentages are by weight, unless stated otherwise. The temperatures are quoted in °C.

Example 1: 2-(2,5-Dimethylpyrrole-1-yl)-pyridine

2-Aminopyridine (18.8g, 0.2 mole), hexane-2,5-dione (22.8g, 0.2 mole) and p-toluenesulphonic acid (1.5g) are heated at reflux in toluene (150 ml) for 7 hours. Evaporation of the solvent gives 24.0g of an orange oil b.p. 130 °C/8 mbar pressure.

'HNMR (neat liquid) δ 2.15 ppm (6H), δ 5.96 ppm (2H), δ 80.7 (2H), δ 7.58 ppm (1H), δ 8.48 ppm (1H).

Examples 2 to 9:

Using the procedure described in Example 1, the compounds specified in Table 1 are prepared, using the specified amines A-$NH_2$ instead of 2-aminopyridine.

Table 1:

| Example | Residue A | n | $R_3$ | Analytical data |
|---|---|---|---|---|
| 1 | 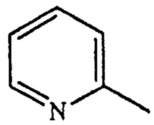 | O | - | ’HNMR (neat) δ 2.15 (6H), δ 5.96 (2H), δ 7.06 (2H), δ 7.58 (1H) δ 8.48 (1H) ppm |
| 2 | 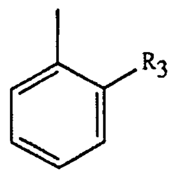 | 1 | OH | ’HNMR ($CDCl_3$) δ 1.90 (6H), δ 5.65 (2H), δ 6.75 (4H) ppm |
| 3 | 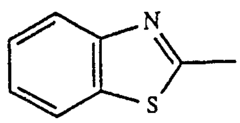 | O | - | ’HNMR ($CDCl_3$) δ 2.30 (6H), δ 5.90 (2H), δ 7.15-7.95 (4H) ppm |
| 4 | 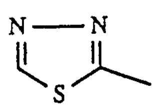 | O | - | B.P. 180°C/8 mbar<br>’HNMR ($CDCl_3$) δ 2.20 (6H), δ 5.82 (2H), δ 9.22 (1H) ppm |
| 5 | 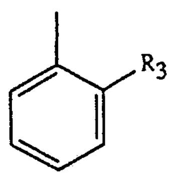 | 1 | SH | B.P. 100°C/0.6 mbar<br>’HNMR ($CDCl_3$) δ 1.85 (6H), δ 2.95 (1H), δ 5.85 (2H), δ 6.88-7.20 (4H) ppm |
| 6 | 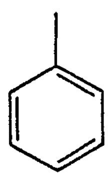 | O | - | M.P. 50°-1°C<br>’HNMR ($CDCl_3$) δ 1.90 (6H), δ 5.90 (2H), δ 6.8-7.2 (5H) ppm |
| 7 | 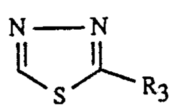 | 1 | SH | M.P. 108°-9°C<br>’HNMR ($CDCl_3$) δ 2.23 (6H), δ 5.8 (2H) ppm |
| 8 | 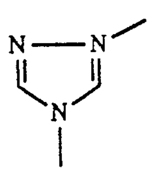 | O | - | ’HNMR ($CDCl_3$) δ 2.03 (6H), δ 5.82 (2H), δ 8.35 (2H) ppm |
| 9 | 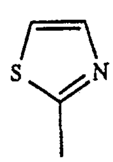 | O | - | B.P. 85°C/0.02 mbar<br>’HNMR ($CDCl_3$) δ 2.16 (6H), δ 5.65 (2H), δ 7.10 (1H), δ 7.44 (1H) ppm |

Table 1 contd.:

| Example | Residue A | n | $R_3$ | Analytical data |
|---|---|---|---|---|
| 10 | 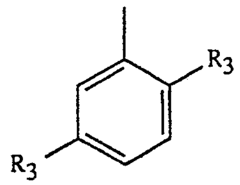 | 2 | $OCH_3$ | M.P. 68°C 'HNMR ($CDCl_3$) δ 2.0 (6H), δ 3.65 (3H), δ 3.75 (3H), δ 5.94 (2H) δ 6.75-6.96 (3H) ppm |
| 11 | 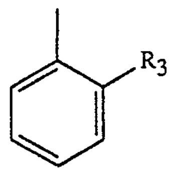 | 1 | Br | B.P. 135°C/0.2 mbar 'HNMR ($CDCl_3$) δ 1.90 (6H), δ 5.84 (2H), δ 6.97-7.68 (4H) ppm |
| 12 | 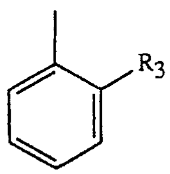 | 1 | $OCH_3$ | M.P. 63°C 'HNMR ($CDCl_3$) δ 3.65 (3H), δ 5.7 (2H), δ 6.93 to 7.74 (4H), δ 1.95 (6H) ppm |
| 13 | 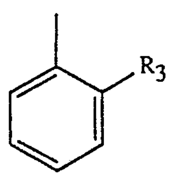 | 1 | $NO_2$ | M.P. 80°C 'HNMR ($CDCl_3$) δ 1.95 (6H), δ 5.90 (2H), δ 7.30-8.10 (4H) ppm |

Example 14:

An alkyd resin paint is prepared in accordance with the following formulation:
40 parts of Alphthalate® 380 (60 % solution in xylene), alkyd resin made by Reichhold Albert Chemie AG,
10 parts of iron oxide red 225 made by Bayer AG,
13.6 parts of talc (micronized),
13 parts of micronized calcium carbonate (Millicarb®, Pluss-Stafer AG),
0.3 part of skin prevention agent Luaktin® (BASF),
0.6 part of 8 % solution of cobalt naphthenate and
22.5 parts of 6:40 xylene/ethyleneglycol mixture.

The paint is ground with glass beads to a pigment and filler particle size of 10-15 µm. The corrosion inhibitors indicated in the tables below are added before grinding. The paint is sprayed onto sand-blasted steel sheets measuring 7 x 13 cm in a layer thickness amounting to approximately 50 µm after drying. After drying at room temperature for 7 days, the samples are subjected to after-curing at 60° C for 60 minutes.

Two cruciform cuts of length 4 cm are cut, down to the metal, in the cured paint surface by means of a bonder cross- cut apparatus. The edges are protected by applying an edge-protection agent (Icosit® 255) to the latter. The samples are now subjected to a salt spray test as specified in ASTM B 117 of a duration of 600 hours. After every 200 hours weathering, the state of the coating is assessed, specifically the degree of bubbling (as specified in DIN 53,209) at the cross-cut and on the painted surface and also the degree of rusting (as specified in DIN 53,210) on the whole surface.

At the end of the tests, the coating is removed by treatment with concentrated sodium hydroxide solution, and the corrosion of the metal at the cross-cut (as specified in DIN 53,167) and over the remainder of the surface is assessed. In each case the assessment is carried out in accordance with a 6-point scale. The sum of the assessment of the coating and the assessment of the metal surface gives the anti-corrosion value AC. The higher this is the more effective is the inhibitor tested.

Results of the salt spray Tests are shown in Table 2.

Table 2

| Corrosion Inhibitor | Amount Added | Assessment of coating | Assessment of metal | AC |
|---|---|---|---|---|
| None | - | 2.4 | 1.8 | 4.2 |
| Product of Example 1 | 2 % | 4.0 | 5.2 | 9.2 |
| Product of Example 2 | 2 % | 3.6 | 4.7 | 8.3 |
| Product of Example 3 | 2 % | 4.0 | 5.4 | 9.4 |
| Product of Example 4 | 2 % | 2.8 | 4.1 | 6.9 |
| Product of Example 5 | 2 % | 2.6 | 3.9 | 6.5 |
| Product of Example 6 | 2 % | 2.8 | 3.3 | 6.1 |
| Product of Example 7 | 2 % | 2.6 | 2.5 | 5.1 |
| Product of Example 8 | 2 % | 2.3 | 2.5 | 4.8 |
| Product of Example 9 | 2 % | 2.4 | 2.2 | 4.6 |

Example 15:

An aqueous alkaline paint formulation having a solids content of 56.15 wt % is prepared using the following formulation.

60.03 wt % Bayhydrol B 130H (30 % in water), an aqueous alkyd resin supplied by Bayer A.G.
0.14 % Servosyn WEB (8 %), a siccative
0.28 % Ascinin R
20.57 % Bayferrox 130M, an iron red oxide
5.15 % Heladol 10 (calcium carbonate)
10.6 % micronised talc
0.2 % Aerosil 300 (a thixotropic agent)
1.06 % ZnO
0.9 % butylglycol
0.05 % aluminium octoate
0.46 % water

1.12 % (2 % on solids content) of a product of Examples 10 to 13 is dispersed in separate samples of the paint formulation

Each paint sample is applied onto cold rolled steel plates at a layer thickness of 55-60 microns and dried for 72 hours at 20° C.

The painted plates are then placed in a sealed chamber and exposed for 800 hours to condensed moisture at 40° C/100 % rel. humidity.

The results are summarised in the following table.

| Additive | % Additive | Assessment of Coating | Assessment of metal | AC |
|---|---|---|---|---|
| Control | Nil | 5.0 | 2.9 | 7.9 |
| Product of Ex. 10 | 2 | 5.2 | 5.1 | 10.3 |
| Product of Ex. 11 | 2 | 5.2 | 3.5 | 8.7 |
| Product of Ex. 12 | 2 | 5.2 | 4.2 | 9.4 |
| Product of Ex. 13 | 2 | 4.2 | 4.7 | 8.9 |

## Claims

1. A composition comprising a coating material or a lubricant and, as corrosion inhibitor and/or antioxidant, at least one compound having the formula I

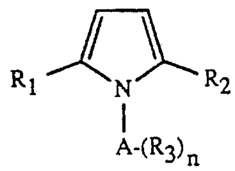

I

wherein
A is a phenyl or naphthyl residue or a residue of a heterocyclic ring having 5-7 ring members and containing 1 to 4 nitrogen atoms and 0 to 2 sulphur or oxygen atoms and which is substituted by n groups $R_3$;
$R_1$ and $R_2$ are the same or different and each is hydrogen, $C_1$-$C_4$ alkyl or $C_6$-$C_{10}$ aryl;
$R_3$ is $C_1$-$C_{15}$ alkyl, $C_1$-$C_4$ halogenoalkyl, $C_1$-$C_{12}$ alkoxy, thio, $C_1$-$C_{12}$ alkylthio, phenylthio, benzylthio, phenyl, $C_7$-$C_{15}$ alkylphenyl, $C_7$-$C_{10}$ phenylalkyl, halogen, nitro, cyano, carboxy-($C_1$-$C_{12}$ alkyl), hydroxy, amino, $CONH_2$, $CONH(R_4)$, $CON(R_4)_2$,$NHR_4$ or $N(R_4)_2$ in which $R_4$ is $C_1$-$C_{15}$ alkyl, $C_3$-$C_{15}$ alkyl interrupted by one or more oxygen atoms, or is $C_5$-$C_{12}$ cycloalkyl, benzyl or phenyl which is optionally substituted by halogen, $C_1$-$C_4$ alkyl, $C_1$-$C_4$ alkoxy or nitro, or the group $N(R_4)_2$ is a pyrrole, piperidine or morpholine group; and n is 0, 1, 2 or 3.

2. A composition according to claim 1 wherein A is a phenyl residue or a rresidue of a heterocyclic ring having 5-6 ring members and containing 1-3 nitrogen and 0 or 1 sulphur atom and which is substituted by n groups $R_3$, $R_1$ and $R_2$ are the same or different and each is hydrogen, $C_1$-$C_4$ alkyl or phenyl, $R_3$ is hydroxy, mercapto, $C_1$-$C_4$ alkyl, $C_1$-$C_4$ alkoxy, phenyl, halogen, nitro or cyano and n is 0, 1 or 2.

3. A composition according to claim 1 wherein A is a phenyl residue or a pyridyl, thiazolyl, benzthiazolyl, triazolyl or thiadiazolyl residue which is substituted by n groups $R_3$, $R_1$ and $R_2$ each are methyl, $R_3$ is hydroxy, mercapto, $C_2$-$C_4$ alkyl, $C_1$-$C_4$ alkoxy, halogen or nitro and n is 0, 1 or2.

4. A composition according to claim 3 wherein A is a phenyl residue substituted by n groups $R_3$ and $R_1$, $R_2$, $R_3$ and n are as defined in claim 3.

5. A composition according to claim 1 wherein the coating material is a primer for a metallic substrate.

6. A composition according to claim 5 wherein the metallic substrates is iron, steel, copper, zinc or aluminium.

7. A composition according to claim 1 wherein the coating material is an aqueous coating material.

8. A composition according to claim 7 wherein the aqueous paint is a cathodically-depositable coating material.

9. A composition according to claim 1 wherein the coating material contains, based on the solids content of the coating material, 0.5 to 5 wt % of at least one compound of formula I as defined in claim 1.

10. A composition according to claim 1 wherein the coating material is based on an epoxy resin, a polyurethane, an aminoplast, an acrylic, alkyd or polyester resin, or a mixture of such resins.

11. A composition according to claim 1 wherein the coating material is based on a vinyl polymer, a cellulose ester, a chloro-rubber, a phenol resin, a styrene-butadiene copolymer or a drying oil.

12. A composition according to claim 1 wherein the lubricant is a lubricating oil or lubricating grease.

13. A composition according to claim 12 containing 0.2 to 2 wt % of at least one compound of formula I

as defined in claim 1.

14. A method of making a coating material or a lubricant having improved corrosion inhibition properties and antioxidant properties, comprising the step of adding to said material an effective amount of a compound of formula I according to claim 1.